# EUROPEAN PATENT SPECIFICATION

(11) **EP 2 331 374 B1**
(45) Date of publication and mention of the grant of the patent: **03.10.2012**
(21) Application number: 09786109.0
(22) Date of filing: 03.08.2009
(51) Int. Cl.: B60T 3/00

(54) **WEDGE FOR VEHICLES, DEVICE AND METHOD FOR LEVELLING VEHICLES**
KEIL FÜR FAHRZEUGE, VORRICHTUNG UND VERFAHREN ZUM HOLMEN VON FAHRZEUGEN
CALE POUR VÉHICULES, DISPOSITIF ET PROCÉDÉ DE MISE À NIVEAU DE VÉHICULES

(30) Priority: 12.09.2008 IT VI20080213
(43) Date of publication of application: 15.06.2011
(73) Proprietor: Brun, Giancarlo, 36015 Thiene (IT)
(72) Inventor: Brun, Giancarlo, 36015 Thiene (IT)
(74) Representative: Ziliotto, Tiziano
(86) International application number: PCT/IB2009/006461
(87) International publication number: WO 2010/029397

(56) References cited:
- EP-A1- 1 717 172
- DE-A1- 10 010 372
- FR-A1- 2 394 423
- US-A- 2 773 564
- US-A- 4 034 961
- US-A1- 2004 108 172
- US-A1- 2007 089 941

## Description

The present invention concerns the sector of motor vehicles.

More precisely, the invention concenrs a wedge for levelling a vehicle as well as a device and a method for levelling a vehicle.

The wedge, the device and the method proposed can advantageously be used for levelling motor vehicles, preferably motor vehicles with living accomodation usually called campers.

It is clear, however, that both the method and the wedge provided by the invention can be used for levelling any vehicle.

As is known, a camper is a motor vehicle with living accomodation and its inside is furnished with various elements, usually comprising one or more beds, sinks etc.

In order to ensure the correct operation of the devices provided and to increase comfort for the persons living therein, once the camper has reached its destination it must be levelled.

This operation consists in trying to place the floor of the furnished compartment of the vehicle in horizontal position.

The least costly and most common device used for carrying out this operation comprises two identical wedges that are inserted between the front wheels of the camper and the ground.

Each wedge consists of a main body, substantially in the shape of a triangular prism, having one base face suited to be placed in contact with the ground and one surface suited to define an inclined plane with respect to the base face, on which the vehicle rests.

The surface of the inclined plane is suitable for supporting the camper's wheel and is wider than the wheel itself.

According to the known levelling method, as first thing the two wedges are positioned before each front wheel and successively the driver moves the vehicle forward and backward in such a way as to raise its front part, trying to level the bed.

Once the best possible position has been reached, the driver locks the vehicle in such position using the braking means with which the vehicle is provided. To lower the vehicle to the ground, the driver releases the braking means and engages the gears, making the vehicle move backward so that the front wheels go down the inclined plane and reach the ground.

A further example of wedges to the prior art are known from documents DE 10010372, US 4034961, EP 1 717 172 A1 and FR 2 394 423 A1.

A first drawback posed by the method described above is represented by the fact that it allows the front wheels to be lifted from the ground to substantially the same degree.

Another drawback connected to the previous one lies in that the method proposed does not make it possible to compensate for any depressions on the ground at the level of the points where the wheels rest on the ground.

A further drawback posed by the method described is represented by the fact that it makes it possible to level the bed only if the surfaces on which the wedges rest are coplanar and the rear wheels are also placed on the same plane.

Another drawback is represented by the fact that during the manoeuvres for positioning the vehicle on the wedges (forward-backward movements) the latter can be pushed away from the vehicle. This occurs in particular when the driver moves the vehicle to make it go down the inclined surfaces, with the clear risk of hitting objects or persons in the vicinity of the vehicle.

The object of the present invention is to overcome all the drawbacks described above.

In particular, it is a first object of the present invention to provide a method for levelling a vehicle in a simple and rapid manner.

It is another object of the invention to implement a method that can be applied even by the driver without the aid of other operators.

It is a further object of the invention to implement a method that makes it possible to level a vehicle even when the wheels of the vehicle in question are not on the same plane. In other words, it is one of the objects of the invention to implement a method that allows the vehicle's bed to be levelled also on uneven ground.

It is a further object of the invention to provide a new wedge and a device that can be advantageously used also to implement the levelling method proposed above.

It is another object of the invention to provide a wedge and a device that are economical, light, compact and reliable.

The objects described above are achieved by a method for levelling a vehicle, a wedge and a device in accordance with the contents of the corresponding independent claims.

Advantageous embodiments of the invention are described in the dependent claims.

The objects and advantages illustrated above will be highlighted in greater detail in the description of some preferred embodiments of the invention, provided as non-limiting examples with reference to the attached drawings, wherein:
- Figure 1 shows a perspective view of a wedge that is the subject of the present invention;
- Figure 2 shows a side view of the wedge of Figure 1 engaged with the wheel of a vehicle;
- Figure 3 shows another perspective view of the wedge of Figure 1 cooperating with another wedge;
- Figure 4 shows a side view of the wedges shown in Figure 3;
- Figure 5 shows a perspective view of another example of embodiment of a wedge constructed according to the invention;
- Figure 6 shows a perspective view of a further example of embodiment of a wedge constructed according to the invention;
- Figure 7 shows a perspective view of the wedge of Figure 6 partially assembled;
- Figure 8 shows a perspective and exploded view of the wedge of Figure 6;
- Figure 9 shows a perspective view of an element of the wedge of Figure 6;
- Figure 10 shows a perspective view of a device that is the subject of the present invention;
- Figure 11 shows a plan view of the device shown in Figure 10;
- Figure 12 shows a perspective and exploded view of the device of Figure 10;
- Figure 13 shows a side view of the device of Figure 10 engaged with a wheel of a vehicle;
- Figure 14 shows a perspective view of another example of embodiment of a device constructed according to the present invention;
- Figure 15 shows a plan view of the device shown in Figure 14;
- Figure 16 shows a side view of the device shown in Figure 14;
- each one of Figures from 17 to 24 schematically shows a side view of a corresponding step of the levelling and/or lifting method that is also the subject of the invention;
- each one of Figures from 25 to 27 schematically shows a side view of a corresponding step of the levelling and/or lifting method that is also the subject of the invention applied using the device of Figure 10;
- each one of Figures from 28 to 30 schematically shows a side view of a corresponding step of the levelling and/or lifting method that is also the subject of the invention applied using the device of Figure 14.

By way of introduction, it is important to point out that corresponding components in different examples of embodiment are indicated by the same reference numbers.

It is also important to underline that, for a better understanding of the schematic diagrams attached, some parts of the non-limiting examples of embodiment shown can be represented using dotted lines.

In the following description relative to the figures, some particular embodiments of the present invention will be illustrated but the present invention is obviously not limited to said particular embodiments; rather, the particular embodiments described below clarify various aspects of the present invention, the object and the scope of which are defined by the claims.

With reference to the attached drawings, here below is the description of some embodiments of wedges for levelling and/or lifting and/or stabilizing a vehicle according to the present invention, as well as of a device and a method for lifting and/or stabilizing and/or levelling a means of transport.

Analogously, the invention concenrs both a device for lifting and/or stabilizing and/or levelling a vehicle and a method for lifting and/or stabilizing and/or levelling a vehicle. More particularly, the proposed solution is suited to be used for lifting and/or stabilizing and/or levelling any type of vehicle.

In particular, the proposed solution is well suited to carry out such operations with vehicles likes campers, motor homes, and the like.

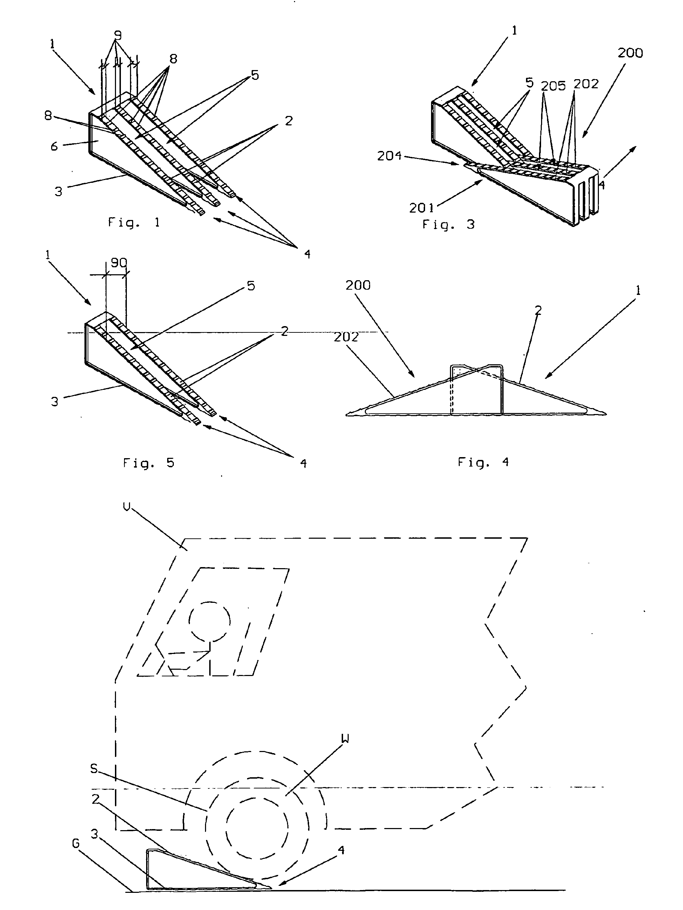

A non-limiting example of embodiment of a wedge subject of the present invention is represented in Figure 1, where it is indicated as a whole by 1. The wedge 1 comprises a supporting surface 2 suited to be engaged (to come into contact) with a surface S of a wheel W of a vehicle V, shown in particular in Figure 2.

In the wedge 1 it is possible to identify a base face 3 suited to rest on the ground G and a vertex 4.

The wedge comprises also one or more seats, indicated as a whole by 5, each one suited to accomodate at least one part 201 of at least another wedge 200, as shown in Figures 3 and 4.

In particular, in the example of embodiment illustrated herein, the wedge comprises two seats 5 and the second wedge 200 is equal to the wedge 1, that is, it comprises two seats 205 suited to accommodate parts of the wedge 1. Said one or more seats 5 are suited to ensure that the vertices 204 of the wedge 200 do not interfere with the vertices 4 of the wedge 1, thus allowing the wedge 200 to be inserted in the wedge 1 through the seats 5, in such a way as to obtain, as will be described in greater detail below, the lifting and/or stabilization and/or leveling and/or locking of the wheel W of the vehicle V. In the particular example of embodiment shown in Figure 1, the wedge 1 consists of a single comb-shaped monobloc body 6.

More particularly, the wedge 1 is obtained by moulding a synthetic material or die casting a metal.

According to the preferred non limiting example of embodiment illustrated herein, the supporting surface 2 is constituted by a plane surface that is inclined in relation to the base face 3 of the wedge.

This supporting surface 2 defines, together with the base face 3, the vertex 4 of the wedge 1 with an acute angle.

According to the non-limiting example of embodiment illustrated herein, the supporting surface 2 comprises one or more projections or steps 8 suited to improve the adhesion of the wheel W to the surface 2.

It should also be observed that the width 9 of the supporting surface 2 is inferior to the width of the wheel W that has to rest thereon.

The width 9 of the supporting surface 2 of the wedge 1 is inferior to the width of the wheel W owing to the presence of the seats 5.

In other words, when the wedge 1 is arranged in operating position, the supporting surface 2 of the wedge 1 does not engage (come into contact) with the entire width of the wheel W.This means that the wedge 1 is shaped in such a way as to provide a supporting surface 2 that engages only partially with the wheel W resting thereon. Said supporting surface 2, in fact, is interrupted by the presence of said seats 5 that allow at least another wedge 200 to be accomodated.

As already explained, in the example illustrated herein the second wedge 200 is identical to the first wedge 1.

The supporting surface 202 of the second wedge 200 does not engage with the entire width T of the wheel W.

In other words, also the width 209 of the supporting surface 202 of the wedge 200 is inferior to the width of the wheel W.

It is clear that the number of seats 5 suited to accomodate at least one part of at least another wedge 200 can vary from one to more than one and the seats can be provided in any number. Vice versa, the wedge 200 may not necessarily be provided with seats 5.

In particular, a further preferred and non-limiting example of embodiment of the invention, indicated as a whole by 100 in Figure 5, differs from the previous one due to the fact that the wedge 100 comprises a single seat 5 arranged in intermediate position with respect to the overall width 90 of the wedge 100.

In the further preferred and non-limiting example of embodiment of the invention indicated as a whole by 102 in Figures from 6 to 8 the wedge 102 differs from the wedge illustrated in Figure 1 owing to the fact that it comprises several elements 10 connected to one another.

More precisely, the elements 10 are removably connected to one another through connection means indicated as a whole by 11.

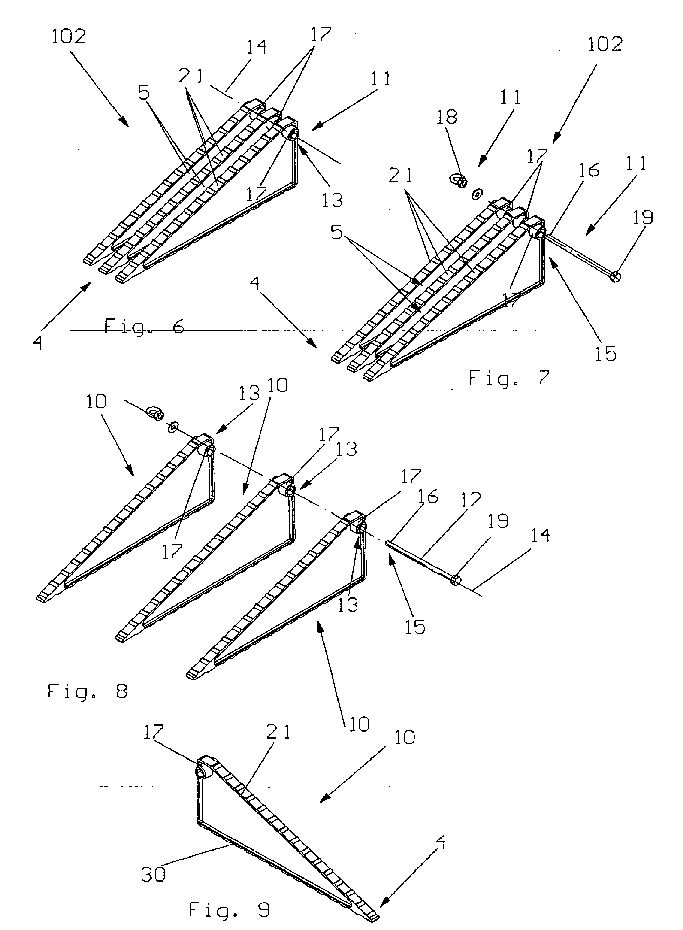

More particularly, in the example shown herein all the elements 10, one of which is illustrated in detail in Figure 9, comprise a base face 30 suited to be placed in contact with the ground G and a part 21 of the supporting surface of the wedge 2.

In other words, the supporting surface of the wedge 102 is obtained by joining the surfaces 21 of each element 10 having a preferably triangular shape.

Also in this case each element can be obtained through die casting or moulding, for example of synthetic materials.

As regards the connection means 11, they comprise a pin 12 suited to be housed in corresponding holes 13 made in each element 10.

This solution advantageously allows each element 10 to rotate around the axis 14 defmed by the pin 12.

Such independent movement of each element 10 in relation to another element 10 allows the wedge 102 to adapt to any irregularity of the ground G.

It should be observed that the connection means 12 are suited to maintain said elements 10 spaced from one another and arranged side by side in order to define the seats 5. The distance between said elements 10 is such as to allow the insertion of at least part of another wedge.

More particularly, the distance between the various elements is kept constant thanks to the presence of spacer elements 17 that in the example of embodiment illustrated herein belong to each element 10.

It should also be observed that the spacer elements are positioned in the rear part of the wedge, that is, opposite its vertex 4. More particularly, said spacer elements are arranged in the upper part of the wedge.This in order to prevent said spacer elements from interfering with the other wedge when it is inserted in the seat 5.

This solution advantageusly makes it possible to house most of the other wedge in the seat 5.

The pin 12 is also provided with at least one section 16 of an end 15 threaded and suited to be coupled with a nut 18 that tightens the elements 10 and prevents them from overturning while at the same time keeping them spaced from each other.

The pin 12 is also provided at the other end with a shaped head 19, which in the example illustrated herein has the shape of an hexagon, suited to be coupled with a corresponding housing of an element 10.

It should also be observed that, advantageously, the elements 10 are all the same and can be obtained for example through a moulding or die casting process.

Furthermore, this solution allows the user to make wedges 102 comprising any number of elements 10.

In other words, the user may, for example according to the width of the wheel with which the wedge must come into contact, choose to use a wedge with three or four or two elements 10.

It should also be observed that, advantageously, the wedge 102 can be disassembled and therefore stored occupying a minimum space.

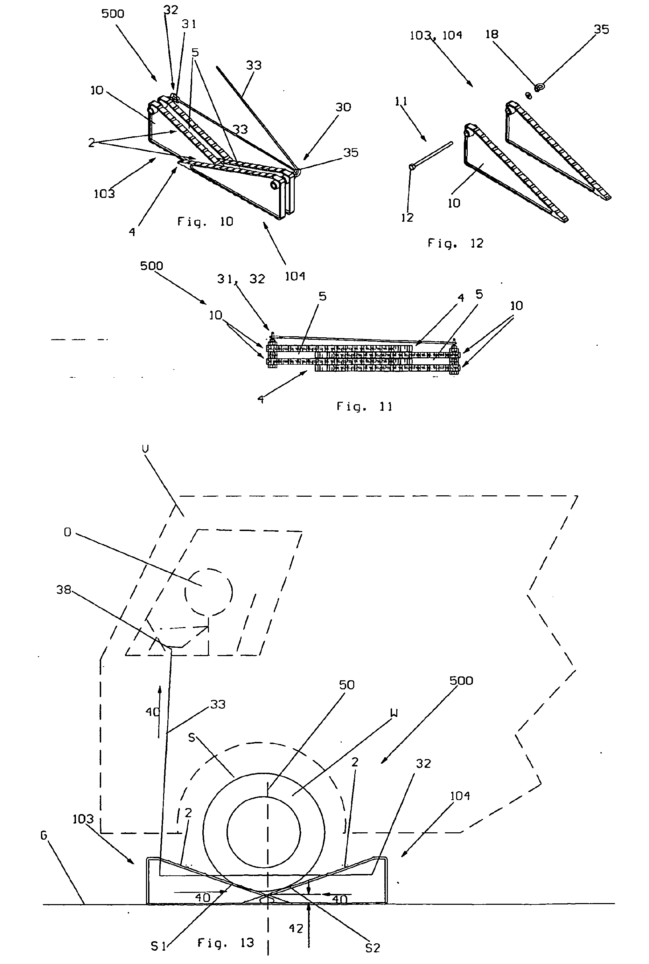

A device for lifting and/or stabilizing a vehicle constructed according to the present invention is shown in Figures 10, 11 and 12, where it is indicated as a whole by number 500.

It comprises a first wedge 103 and a second wedge 104, each provided with a supporting surface 2 suited to be engaged with a surface S of a wheel W of a vehicle V, as shown in Figure 13.

The first wedge 103 comprises at least one seat 5 suited to accomodate at least part of said at least one second wedge 104.

In particular, in the example illustrated herein, the two wedges 103 and 104 are identical and are of the type previously described and shown in Figure 6, the only difference lying in that each of them comprises two elements 10, as shown in Figure 12.

In other words, also the second wedge 104 comprises at least one seat 5 suited to accomodate at least part of the second wedge 103.

In the preferred embodiment of the invention illustrated herein the device comprises, therefore, two wedges that have substantially the same comb-shaped configuration and are specular to each other. The two wedges are shaped so that, if arranged with facing vertices 4, they can be positioned with the elements 10 of the first wedge 103 corresponding to the seats 5 of the second wedge 104 and with the elements 10 of the second wedge 104 corresponding to the seats 5 of the first wedge 103.

In other words, the two wedges are shaped so that they can be arranged with the seats 5 of a wedge corresponding to the solid portions of the other wedge. This allows the mutual approach of the wedges without interferences, as shown in Figures 10 and 11.

It should be noted that, as will be described in greater detail below, the supporting surfaces 2 of the first and second wedge 103 and 104 are suited to be engaged with opposing portions 51 and 52, in relation to a vertical axis 50, of the surface of the wheel W with which they are engaged, as shown in Figure 13.

It should also be noted that the wheel W engages with the two supporting surfaces 2 of the two wedges 103 and 104 in order to support the wheel W and keep it stable and locked, even when the braking means of the vehicle V are deactivated.

It should also be observed that the sum of the portion of the surface 2 of the first wedge 103 engaged with the surface S of a portion of the wheel W and the portion of the surface 2 of the other wedge 104 engaged with the opposite surface of the same wheel W is inferior or equal to the width of the wheel W itself.

It should also be observed that according to the preferred embodiment of the invention illustrated in the Figures from 10 to 13 the device 500 comprises means 30 for handling the two wedges that can be activated by the operator O. More particularly, said handling means 30 are suited to ensure that, once in operation, the two wedges 103 and 104 approach each other, thus placing the supporting surfaces 2 in contact with the surface S of the wheel W.

More precisely, in the non-limiting solution illustrated in Figure 10, said handling means 30 comprise an annular element 31 integral with the first wedge 103, to which one end 32 of a flexible element 33 is fixed, said flexible element 33 consisting for example of a rope that slides through another annular element 35 integral with the other wedge 104.

In the example illustrated herein the annular elements 31 and 35 are integral with the locking nuts 18 of each wedge, as shown in detail in Figures 10 and 12.

The flexible element has therefore one end integral with a wedge 103, as shown in Figures 10 and 11, and the other end 38 free to be seized and pulled by a user O in order to move the two wedges near each other as shown for example in Figure 13 and indicated by the arrows 40.

In other words, the wedges 103, 104 are connected to each other so that they can be moved near each other to form a groove 41 housing the wheel W.

The two wedges 103 and 104 are suited to be engaged with the opposite surfaces 51 and 52 of the wheel W, thus locking it in such position.

It is also clear that the height 42 of the groove with respect to the ground G varies according to the degree of mutual vicinity of the two wedges 103, 104. More precisely, the nearer and more compenetrated the two wedges are with each other, the higher the groove G becomes with respect to the ground G, thus lifting the wheel W.

On the contrary, the farther the two wedges move from each other, the lower the groove G becomes with respect to the ground G, thus lowering the wheel W, as will be described in greater detail below.

It is also clear that in other embodiments of the invention said handling means may also be absent.

In this case, the two wedges 103 and 104 can be moved near each other manually.

It should also be observed that in the preferred embodiment of the invention the device 501 may also comprise means for locking said two wedges in their mutual position, not visible in Figures from 10 to 13.

Said locking means are suited to prevent the two wedges 103 and 104 from moving away from each other, or more generally to prevent any mutual movement of the wedges once the desired distance of the wheel W from the ground has been reached.

Said locking means may consist of fixing devices or hooks.

This further ensures that the wheel placed on the two wedges cannot move.

It is clear, however, that for this purpose the weight of the vehicle may be sufficient, as the vehicle resting on each wedge generates on the ground a considerable friction force between the base face 3 and the ground G.

A further preferred embodiment of a levelling and/or lifting device indicated as a whole by 501 in the Figures from 14 to 16 differs from the previous one due to the fact that the flexible member 33 has its first end 32 integral with a wedge 105 and the other end 38 engaged with actuator means 39 that subject it to traction in order to move the two wedges near each other.

In the particular and on limiting embodiment of the invention illustrated herein, the flexible member 33 is at least one and consists of a chain meshing with a gear wheel 45 integral with the shaft of an electric motor integral with a wedge, said motor constituting the actuator.

It should be noted that the end 32 of the flexible element 33 is, as in the device 500, removably connected to the wedge. The electric motor 46 can be powered by the mains or by accumulators present on the device 501.

It is clear, however, that in other embodiments of the invention said handling means 30 may also comprise pneumatic actuators or rack systems or any other equivalent means suited to allow the two wedges 105 and 106 to be moved near each other.

It should also be observed that in such embodiment each wedge has on its supporting surface 2 a plurality of idle rotary elements 49 constituted for example by balls or cylinders whose rotation axis is parallel to the base face 3. This advantageously makes it possible to lift the vehicle V by simply operating the handling means 30, without moving it, as will be better explained below.

In fact, the operation of the motor by the operator allows the wedges to be moved near and away from each other (according to the motor's rotation direction) and the wheel W to be consequently lifted and/or lowered with respect to the ground G.

Another levelling device not illustrated herein comprises two wedges that can be connected to each other and are arranged with facing and staggered vertices, so that they can be moved near each other without any reciprocal interference. More particularly, in said embodiment the connection means comprise guides that allow the two wedges to be mutually moved near each other and to be maintained side by side and, optionally, means for locking them in their mutual positions.

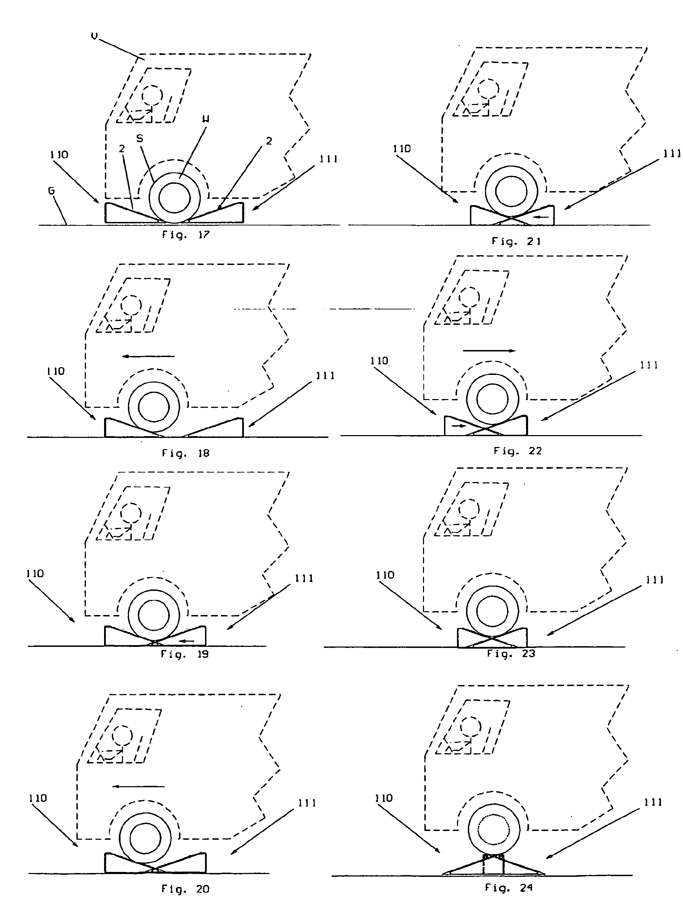

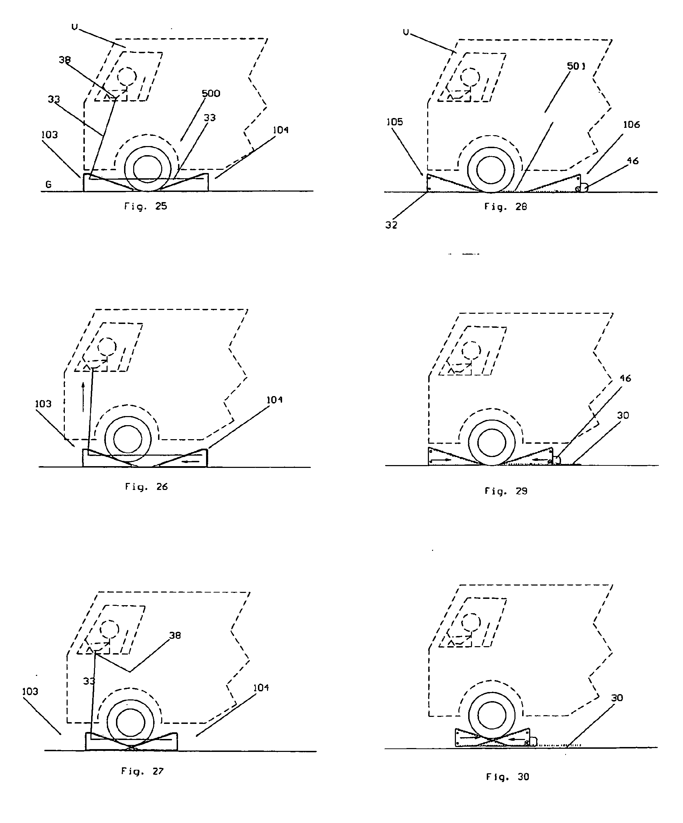

As regards the method for lifting and/or levelling a vehicle V, schematically shown in Figures from 17 to 24, it comprises the following operations:
- arranging a first wedge 110 with its supporting surface 2 on one side of the wheel W of a vehicle V, as shown in particular in Figure 17;
- arranging a second wedge 111 with its inclined supporting surface 2 on the opposite side of the same wheel W of said vehicle V, said wedges 111 having the vertices 4 that do no face each other and therefore do not interfere with each other;
- moving the vehicle V towards one of said wedges 110, 111 making said wheel W go up its inclined surface 2 as much as desired and lifting the vehicle V from the ground, as shown in particular in Figure 18;
- moving the other wedge 111 near said wheel W, thus placing its inclined surface 2 in contact with the wheel W and stabilizing the position of the vehicle V, as shown in particular in Figure 19;
- repeating the previous two operations until lifting said wheel W from the ground G as much as desired, as shown in particular in Figures from 20 to 24.

It is clear that the method proposed herein can also be applied to more wheels W of the same vehicle V, thus levelling its bed.

Furthermore, it can also be implemented using traditional wedges. It is clear, however, that the wedges described above, which are also the subject of the present invention, allow the method described above to be implemented in an optimal way, guaranteeing the stability of the vehicle.

It should be noted, in fact, that the proposed wedges make it possible to guarantee that each wedge engages with the wheel W, so that the centre of the wheel comes between the supporting surfaces 2 of each wedge. In other words, even if the middle portion of the wheel does not rest on any surface, it will be included between two supported portions. This gives stability to the system and prevents the device or the wedge from overturning under the weight of the vehicle.

The Figures from 25 to 27 schematically show the operations needed to implement the method described above, carried out using a device of the type illustrated in Figure 10.

In this case, the procedure differs from the previous one due to the fact that the two wedges 103 and 104 are moved near each other by the operator O, by tensioning the rope 33.

It should be observed that, advantageously, in the example illustrated herein the two wedges are moved near each other by the driver itself, by pulling the rope 33.

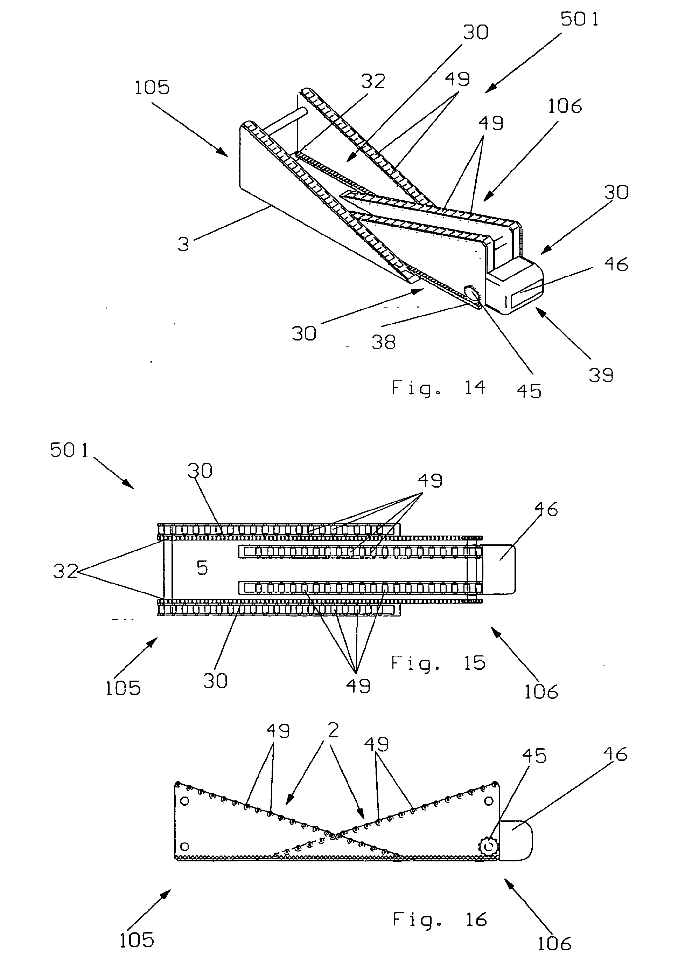

The Figures from 28 to 30 schematically show the operations needed to implement the procedure described above, carried out using a device of the type illustrated in Figure 14.

In this case the procedure differs from the previous one due to the fact that the vehicle V must not be moved and that the two wedges 105, 106 are moved near each other by the operator or, in this case, by the driver, by starting the electric motor 46 with a control.

It should be noted in particular that in this case, once the two wedges 105 and 106 have been arranged in proximity to the wheel W and the end 32 of the flexible element 30 has been connected and fixed to the first wedge 10, to lift the wheel W the operator O must simply start the electric motor 46.

In fact, in this case the wheel W slides on the idle rollers 49 with which the surface 2 is provided.

Clearly, the operations described above can be carried out on one or more wheels of a vehicle, thus levelling its bed.

The above description clearly shows that the solutions proposed allow the set goals to be achieved.

Advantageously, the proposed solution makes it possible to provide a wedge and a device that are very simple to use, reliable and inexpensive, as well as to implement a practical and easily applicable method.

Obviously, various modifications can be made to the wedge and the device that are the subjects of the present invention, without departing from the scope or object of the invention.

It should therefore be noted that the scope of the present invention is defined by the claims, including all forms equivalent to those claimed.

Even though the invention has been described making reference to the attached drawings, upon implementation changes can be made that shall all be considered protected by the present patent, provided that they fall within the scope of the inventive concept expressed in the following claims.

It is also important to remember that when the details mentioned in the claims below are followed by references, these must be understood as meant to improve the comprehensibility of the claim in question and not as a limit to the interpretation of the same.

Without departing from the scope of the invention, the person skilled in the art can change and improve the subject of the invention as suggested by the natural evolution of the art.

## Claims

1. Wedge (1, 100, 101, 102, 103, 104, 105, 106, 110, 111) comprising a supporting surface (2) suited to be engaged with a surface (S) of a wheel (W) of a vehicle (V), and a base face (3) suited to rest on the ground (G), said supporting surface (2) and said base face (3) defining a vertex (4), said wedge further comprising one or more seats (5); **characterized in that** said one or more seats extend from said supporting surface (2) to said base face (3) so that said vertex (4) is interrupted in correspondence of said one or more seats (5), thus allowing one or more parts of at least one second wedge also comprising a base face suited to rest on the ground (G) to be received in corresponding one or more seats of said wedge (1, 100, 101, 102, 103, 104, 105, 106, 110, 111) with said base faces of both said wedge (1, 100, 101, 102, 103, 104, 105, 106, 110, 111) and said second wedge resting on the ground (G).

2. Wedge according to claim 1), **characterized in that** said one or more seats (5) are suited to ensure that the vertices (4) of said wedges do not interfere with each other.

3. Wedge according to claim 1) or 2), **characterized in that** the supporting - -surface (2) is narrower than said wheel (W).

4. Wedge according to any of the preceding claims, **characterized in that** said wedge is constituted by a single body.

5. Wedge according to any of the preceding claims, **characterized in that** it consists of several modular elements (10) that can be removably connected to one another via connection means.

6. Wedge according to claim 5), **characterized in that** said connection means (11) are suited to maintain said elements (10) spaced from one another and arranged side by side.

7. Wedge according to claim 1) and 2), **characterized in that** said supporting surface comprises idle rotary elements.

8. Device (500, 501) for lifting and/or stabilizing and/or levelling a vehicle (V), comprising a first wedge (103, 105) and a second wedge (104, 106), each provided with a supporting surface (2) suited to be engaged with a surface (S) of a wheel (W) of a vehicle (V), each of said first and second wedges (103, 105), (104, 106) further comprising a base face adapted to rest on the ground (G); **characterized in that** said first wedge (103, 105) is a wedge according to one of claims 1 to 7, so that one or more parts of said second wedge (104, 106) may be received in corresponding one or more seats (5) of said first wedge (103, 105), with said base faces of both said first wedge (103, 105) and said second wedge (104, 106) resting on the ground (G).

9. Device according to claim 8), **characterized in that** said wedges are suited to be engaged with opposite sides of the surface of said wheel (W).

10. Device according to claim 8) or 9), **characterized in that** said wedges can be moved near each other via suitable means that can be activated manually or via preferably electrical or pneumatic actuators.

11. Device according to claim 9) or 10), **characterized in that** said wedges are curried out, so that the vertices of said at least one first wedge do not interfere with the vertices of said second wedge but can be arranged at the level of the seats of said second wedge.

12. Device according to any of the claims from 8) to 11), **characterized in that** it comprises means for locking said wedges in the reciprocal position they have assumed.

13. Method for lifting a vehicle (V), said method comprising the following steps:
- arranging a first wedge (1) according to one of claims I to 7 with its inclined surface (2) on one side of the wheel (W) of said vehicle (V) and its base face (3) resting on the ground (G);
**characterized in that**, said method further comprises:
- arranging a second wedge (200) with its inclined surface (2) on the opposite side of the same wheel (W) of said vehicle (V), and its base face resting on the ground (G);
- moving said vehicle (V) towards one of said wedges (1, 200) making said wheel (W) go up its inclined surface (21) as much as desired, lifting it from the ground;
- moving the second wedge (1, 200) near said wheel (W), placing its inclined surface (2) in contact with said wheel (W) and so that one or more parts of said second wedge (1, 200) are inserted into corresponding one or more seats (5) of said first wedge;
- repeating the two previous operations until lifting said wheel (W) from the ground as much as desired.

14. Method for lifting a vehicle (V), said method comprising the following steps:
- arranging a first wedge (105) according to one of claims 1 to 7 with its inclined surface (2), preferably provided with idle rotary elements (49), on one side of the wheel (W) of said vehicle (V) and its base face (3) resting on the ground (G);
**characterized in that** said method further comprises:
- arranging a second wedge (106) with its inclined surface (2), preferably provided with idle rotary elements (49), on the opposite side of the same wheel (W) of said vehicle (V), and its base face resting on the ground (G); moving said wedges (105, 106) mutually near each other until lifting said wheel (W) from the ground (G) as much as desired.

## Patentansprüche

1. Keil (1, 100, 101, 102, 103, 104, 105, 106, 110, 111), der eine Tragfläche (2), die dazu geeignet ist, mit einer Oberfläche (S) eines Rads (W) eines Fahrzeugs (V) in Eingriff gebracht zu werden, und eine Grundfläche (3) umfasst, die dazu geeignet ist, auf dem Boden (G) zu ruhen, wobei die Tragfläche (2) und die Grundfläche (3) einen Scheitel (4) definieren, wobei der Keil ferner eine oder mehrere Aufnahmen (5) umfasst; **dadurch gekennzeichnet, dass** sich die eine oder mehreren Aufnahmen derart von der Tragfläche (2) zur Grundfläche (3) erstrecken, dass der Scheitel (4) in Entsprechung mit der einen oder den mehreren Aufnahmen (5) unterbrochen ist, so dass es möglich ist, dass ein oder mehrere Teile von mindestens einem zweiten Keil, der ebenfalls eine Grundfläche umfasst, die dazu geeignet ist, auf dem Boden (G) zu ruhen, in einer oder mehreren entsprechenden Aufnahmen dieses Keils (1, 100, 101, 102, 103, 104, 105, 106, 110, 111) aufgenommen werden, wobei die Grundfläche sowohl dieses Keils (1, 100, 101, 102, 103, 104, 105, 106, 110, 111) als auch des zweiten Keils auf dem Boden (G) ruht.

2. Keil nach Anspruch 1), **dadurch gekennzeichnet, dass** die eine oder mehreren Aufnahmen (5) dazu geeignet sind, sicherzustellen, dass die Scheitel (4) der Keile einander nicht überlagern.

3. Keil nach Anspruch 1) oder 2), **dadurch gekennzeichnet, dass** die Tragfläche (2) schmaler als das Rad (W) ist.

4. Keil nach einem der vorherigen Ansprüche, **dadurch gekennzeichnet, dass** der Keil aus einem einzigen Körper besteht.

5. Keil nach einem der vorherigen Ansprüche, **dadurch gekennzeichnet, dass** er aus mehreren modularen Elementen (10) besteht, die mit Verbindungsmitteln lösbar miteinander verbunden werden können.

6. Keil nach Anspruch 5), **dadurch gekennzeichnet, dass** die Verbindungsmittel (11) dazu geeignet sind, die Elemente (10) voneinander beabstandet und nebeneinander angeordnet zu halten.

7. Keil nach Anspruch 1) und 2), **dadurch gekennzeichnet, dass** die Tragfläche frei drehbare Elemente umfasst.

8. Vorrichtung (500, 501) zum Anheben und/oder Stabilisieren und/oder Nivellieren eines Fahrzeugs (V), die einen ersten Keil (103, 105) und einen zweiten Keil (104, 106) umfasst, die jeweils mit einer Tragfläche (2) versehen sind, die dazu geeignet ist, mit einer Oberfläche (S) eines Rads (W) eines Fahrzeugs (V) in Eingriff gebracht zu werden, wobei jeder der ersten und zweiten Keile (103, 105), (104,106) ferner eine Grundfläche umfasst, die dazu geeignet ist, auf dem Boden (G) zu ruhen; **dadurch gekennzeichnet, dass** der erste Keil (103, 105) ein Keil nach einem der Ansprüche von 1 bis 7 ist, so dass ein oder mehrere Teile des zweiten Keils (104, 106) in einer oder mehreren entsprechenden Aufnahmen (5) des ersten Keils (103, 105) aufgenommen werden können, wobei die Grundfläche sowohl des ersten Keils (103, 105) als auch des zweiten Keils (104, 106) auf dem Boden (G) ruht.

9. Vorrichtung nach Anspruch 8), **dadurch gekennzeichnet, dass** die Keile dazu geeignet sind, mit entgegengesetzten Seiten der Oberfläche des Rads (W) in Eingriff gebracht zu werden.

10. Vorrichtung nach Anspruch 8) oder 9), **dadurch gekennzeichnet, dass** die Keile mit Hilfe geeigneter Mittel, die von Hand oder mittels vorzugsweise elektrischer oder pneumatischer Aktuatoren betätigt werden können, aufeinander zu bewegt werden können.

11. Vorrichtung nach Anspruch 9) oder 10), **dadurch gekennzeichnet, dass** die Keile so ausgeführt sind, dass sich die Scheitel des mindestens einen ersten Keils nicht mit den Scheiteln des zweiten Keils überlagern, sondern auf Höhe der Aufnahmen des zweiten Keils angeordnet werden können.

12. Vorrichtung nach einem der Ansprüche von 8) bis 11), **dadurch gekennzeichnet, dass** sie Mittel zum Blockieren der Keile in der gegenseitigen Position umfassen, die sie eingenommen haben.

13. Verfahren zum Anheben eines Fahrzeugs (V), wobei dieses Verfahren die folgenden Schritte umfasst:
- Anordnen eines ersten Keils (1) nach einem der Ansprüche von 1 bis 7 mit seiner schrägen Oberfläche (2) auf einer Seite des Rads (W) des Fahrzeugs (V) und mit seiner auf dem Boden (G) ruhenden Grundfläche (3);
**dadurch gekennzeichnet, dass** dieses Verfahren ferner Folgendes umfasst:
- Anordnen eines zweiten Keils (200) mit seiner schrägen Oberfläche (2) auf der entgegengesetzten Seite desselben Rads (W) des Fahrzeugs (V) und mit seiner auf dem Boden (G) ruhenden Grundfläche;
- Bewegen des Fahrzeugs (V) in Richtung von einem der Keile (1, 200), wobei das Rad (W) so weit wie gewünscht dessen schräge Oberfläche (21) hinauffahren gelassen und vom Boden angehoben wird;
- Bewegen des zweiten Keils (1, 200) in die Nähe des Rads (W), wobei seine schräge Oberfläche (2) in Kontakt mit diesem Rad (W) und so angeordnet wird, dass ein oder mehrere Teile des zweiten Keils (1, 200) in eine oder mehrere entsprechende Aufnahmen (5) des ersten Keils eingefügt sind;
- Wiederholen der zwei vorherigen Vorgänge, bis das Rad (W) so weit wie gewünscht vom Boden angehoben ist.

14. Verfahren zum Anheben eines Fahrzeugs (V), wobei dieses Verfahren die folgenden Schritte umfasst:
- Anordnen eines ersten Keils (105) nach einem der Ansprüche von 1 bis 7 mit seiner schrägen Oberfläche (2), die vorzugsweise mit frei drehbaren Elementen (49) versehen ist, auf einer Seite des Rads (W) des Fahrzeugs (V) und mit seiner auf dem Boden (G) ruhenden Grundfläche (3);
**dadurch gekennzeichnet, dass** dieses Verfahren ferner Folgendes umfasst:
- Anordnen eines zweiten Keils (106) mit seiner schrägen Oberfläche (2), die vorzugsweise mit frei drehbaren Elementen (49) versehen ist, auf der entgegengesetzten Seite desselben Rads (W) des Fahrzeugs (V) und mit seiner auf dem Boden (G) ruhenden Grundfläche;
- Bewegen der Keile (105, 106) gegenseitig aufeinander zu, bis das Rad (W) so weit wie gewünscht vom Boden (G) angehoben ist.

## Revendications

1. Cale (1, 100, 101, 102, 103, 104, 105, 106, 110, 111) comprenant une surface de support (2) adaptée pour être engagée avec une surface (S) d'une roue (W) d'un véhicule (V) et une face de base (3) adaptée pour reposer sur le sol (G), ladite surface de support (2) et ladite face de base (3) définissant un sommet (4), ladite cale comprenant en outre un ou plusieurs sièges (5) ; **caractérisée en ce que** lesdits un ou plusieurs sièges s'étendent de ladite surface de support (2) à ladite face de base (3) de manière que ledit sommet (4) soit interrompu en correspondance desdits un ou plusieurs sièges (5), en permettant ainsi à une ou plusieurs parties d'au moins une deuxième cale comprenant également une face de base adaptée pour reposer sur le sol (G) d'être reçue en correspondance d'un ou plusieurs sièges de ladite cale (1, 100, 101, 102, 103, 104, 105, 106, 110, 111) avec lesdites faces de base à la fois de ladite cale (1, 100, 101, 102, 103, 104, 105, 106, 110, 111) et de ladite deuxième cale reposant sur le sol (G).

2. Cale selon la revendication 1, **caractérisée en ce que** lesdits un ou plusieurs sièges (5) sont adaptés pour garantir que les sommets (4) desdites cales n'interfèrent pas l'un avec l'autre.

3. Cale selon la revendication 1 ou 2, **caractérisée en ce que** la surface de support (2) est plus étroite que ladite roue (W).

4. Cale selon l'une quelconque des revendications précédentes, **caractérisée en ce que** ladite cale est constituée par un corps unique.

5. Cale selon l'une quelconque des revendications précédentes, **caractérisée en ce qu'**elle comprend plusieurs éléments modulaires (10) qui peuvent être connectés entre eux de manière amovible par le biais de moyens de connexion.

6. Cale selon la revendication 5, **caractérisée en ce que** lesdits moyens de connexion (11) sont adaptés pour maintenir lesdits éléments (10) espacés entre eux et disposés côte à côte.

7. Cale selon les revendications 1 et 2, **caractérisée en ce que** ladite surface de support comprend des éléments rotatifs fous.

8. Dispositif (500, 501) pour soulever et/ou stabiliser et/ou niveler un véhicule (V), comprenant une première cale (103, 105) et une deuxième cale (104, 106), chacune pourvue d'une surface de support (2) adaptée pour être engagée avec une surface (S) d'une roue (W) d'un véhicule (V), chacune desdites première et deuxième cales (103, 105), (104, 106) comprenant en outre une face de base adaptée pour reposer sur le sol (G) ; **caractérisée en ce que** ladite première cale (103, 105) est une cale selon l'une des revendications 1 à 7, de manière qu'une ou plusieurs parties de ladite deuxième cale (104, 106) puissent être reçues dans un ou plusieurs sièges correspondants (5) de ladite première cale (103, 105), avec lesdites faces de base à la fois de ladite première cale (103, 105) et de ladite deuxième cale (104, 106) reposant sur le sol (G).

9. Dispositif selon la revendication 8, **caractérisé en ce que** lesdites cales sont adaptées pour être engagées avec des côtés opposés de la surface de ladite roue (W).

10. Dispositif selon la revendication 8 ou 9, **caractérisé en ce que** lesdites cales peuvent être déplacées l'une près de l'autre par l'intermédiaire de moyens appropriés qui peuvent être actionnés manuellement ou par l'intermédiaire d'actionneurs de préférence électriques ou pneumatiques.

11. Dispositif selon la revendication 9 ou 10, **caractérisé en ce que** lesdites cales sont réalisées de manière que les sommets de ladite au moins une première cale n'interfèrent pas avec les sommets de ladite deuxième cale mais puissent être disposés au niveau des sièges de ladite deuxième cale.

12. Dispositif selon l'une quelconque des revendications 8 à 11, **caractérisé en ce qu'**elle comprend des moyens pour verrouiller lesdites cales dans la position réciproque qu'elles ont prise.

13. Procédé pour soulever un véhicule (V), ledit procédé comprenant les étapes suivantes :
- la disposition d'une première cale (2) selon une des revendications 1 à 7 avec sa surface inclinée (2) sur un côté de la roue (W) dudit véhicule (V) et sa face de base (3) reposant sur le sol (G) ;
**caractérisé en ce que** ledit procédé comprend en outre :
- la disposition d'une deuxième cale (200) avec sa surface inclinée (2) sur le côté opposé de la même roue (W) dudit véhicule (V) et sa face de base reposant sur le sol (G) ;
- le déplacement dudit véhicule (V) vers une desdites cales (1, 200) en faisant monter ladite roue (W) sur sa surface inclinée (21) autant que désiré, en la soulevant par rapport au sol ;
- le déplacement de la deuxième cale (1, 200) près de ladite roue (W), en plaçant sa surface inclinée (2) en contact avec ladite roue (W) et de manière qu'une ou plusieurs parties de ladite deuxième cale (1, 200) soient insérées dans un ou plusieurs sièges correspondants (5) de ladite première cale ;
- la répétition des deux opérations précédentes jusqu'à soulever ladite roue (W) par rapport au sol autant que désiré.

14. Procédé pour soulever un véhicule (V), ledit procédé comprenant les étapes suivantes :
- la disposition d'une première cale (105) selon une des revendications 1 à 7 avec sa surface inclinée (2), de préférence munie d'éléments rotatifs fous (49), sur un côté de la roue (W) dudit véhicule (V) et sa face de base (3) reposant sur le sol (G) ;
**caractérisé en ce que** ledit procédé comprend en outre :
- la disposition d'une deuxième cale (106) avec sa surface inclinée (2), de préférence munie d'éléments rotatifs fous (49), sur le côté opposé de la même roue (W) dudit véhicule (V) et sa face de base reposant sur le sol (G);
- le déplacement desdites cales (105, 106) réciproquement près l'une de l'autre jusqu'à soulever ladite roue (W) par rapport au sol (G) autant que désiré.
